# EUROPEAN PATENT APPLICATION

(11) **EP 4 583 237 A1**
(43) Date of publication of application: **09.07.2025**
(21) Application number: 23860898.8
(22) Date of filing: 30.08.2023
(51) Int. Cl.: H01M 10/42, H01M 10/0587, H01M 4/13, H01M 10/052, H01M 4/02

(54) **ELECTRODE ASSEMBLY AND SECONDARY BATTERY COMPRISING SAME**

(30) Priority: 31.08.2022 KR 20220110314
(71) Applicant: LG Energy Solution, Ltd., Seoul 07335 (KR)
(72) Inventor: LEE, Ha Na, Daejeon 34122 (KR)
(74) Representative: Goddar, Heinz J.
(86) International application number: PCT/KR2023/012937
(87) International publication number: WO 2024/049222

(57) **Abstract**

The present invention relates to an electrode assembly and a secondary battery including the same, and the electrode assembly according to an embodiment of the present invention may include a positive electrode and a negative electrode, and a separator disposed between the positive electrode and the negative electrode, wherein an avoidance recess part is defined in any one of the positive electrode and the negative electrode, and the avoidance recess part is defined to be recessed in an area overlapping an end of a remaining electrode of the positive electrode and the negative electrode.

## Description

### TECHNICAL FIELD

### CROSS-REFERENCE TO RELATED APPLICATION

The present application claims the benefit of the priority of Korean Patent Application No. 10-2022-0110314, filed on August 31, 2022, which is hereby incorporated by reference in its entirety.

### TECHNICAL FIELD

The present invention relates to an electrode assembly and a device including the same, and more specifically, to an electrode assembly capable of improving safety and a secondary battery including the same.

### BACKGROUND ART

Recently, as demands for portable electronic products such as laptops, video cameras, and mobile phones have rapidly increased, and development of electric vehicles, energy storage batteries, robots, satellites, etc. is regularized, a lot of researches have been conducted on a secondary battery used as a driving power source.

Rechargeable batteries are classified into coin type batteries, cylindrical type batteries, prismatic type batteries, and pouch type batteries according to a shape of a battery case. The electrode assembly mounted inside the battery case is a chargeable and dischargeable power generation device having a structure in which electrodes and separators are stacked.

When a charge/discharge cycle of the secondary battery including the electrode assembly is repeated, stress caused by expansion and contraction of the electrode may be accumulated inside the electrode assembly. If the stress accumulation exceeds a certain limit, deformation of the electrode assembly may occur to cause decrease in stability and detects in performance of the battery.

### DISCLOSURE OF THE INVENTION

### TECHNICAL PROBLEM

Embodiments of the present invention provide an electrode assembly capable of improving stability and a secondary battery including the same.

The object of the present invention is not limited to the aforesaid, but other objects not described herein will be clearly understood by those skilled in the art from descriptions below.

### TECHNICAL SOLUTION

An electrode assembly according to an embodiment of the present invention may include: a positive electrode and a negative electrode; and a separator disposed between the positive electrode and the negative electrode, wherein an avoidance recess part is defined in any one of the positive electrode and the negative electrode, and the avoidance recess part is defined to be recessed in an area overlapping an end of a remaining electrode of the positive electrode and the negative electrode.

The avoidance recess part defined by recessing an area overlapping a winding finish end of the positive electrode may be provided in the negative electrode, and the avoidance recess part may be recessed from an inner surface of the negative electrode, which is disposed toward a winding central portion of the electrode assembly, toward an outer surface of the negative electrode, which is disposed toward a winding outer portion of the electrode assembly.

The negative electrode may include: a first negative electrode active material layer disposed to face the winding central portion; a second negative electrode active material layer disposed to face the winding outer portion; and a negative electrode collector disposed between the first negative electrode active material layer and the second negative electrode active material layer, wherein the avoidance recess part may be defined in the first negative electrode active material layer.

The avoidance recess part may be provided in the form of a groove surrounded by the first negative electrode active material layer and the negative electrode collector.

The negative electrode may include: a first negative electrode active material layer disposed to face the winding central portion and having a multilayer structure comprising a plurality of active material layers; a second negative electrode active material layer disposed to face the winding outer portion; and a negative electrode collector disposed between the first negative electrode active material layer and the second negative electrode active material layer, wherein the avoidance recess part may be defined in at least one of the plurality of active material layers.

At least one of the plurality of active material layers may have a thickness less than that of the second negative electrode active material layer.

The first negative electrode active material layer may include a first active material layer and a second active material layer, and the avoidance recess part may be defined in at least one of the first active material layer or the second active material layer.

The avoidance recess part may be provided in the form of a groove surrounded by the first active material layer and the second active material layer.

The avoidance recess part may be provided in the form of a groove surrounded by the second active material layer disposed on the negative electrode collector and the second active material layer disposed on the first active material layer.

The avoidance recess part may be provided in the form of a groove along a width direction of the negative electrode to overlap a winding finish end of the positive electrode, and the avoidance recess part having the groove shape may extend in parallel to the width direction of the negative electrode.

The avoidance recess part may include: a first avoidance recess part defined in the negative electrode disposed outside a winding finish end of the positive electrode; and a second avoidance recess part defined in the negative electrode disposed inside the winding finish end of the positive electrode.

The first avoidance recess part may be recessed from an inner surface of the negative electrode, which is disposed toward a winding central portion of the electrode assembly, toward an outer surface of the negative electrode, which is disposed toward a winding outer portion of the electrode assembly, and the second avoidance recess part may be recessed from an outer surface of the negative electrode toward an inner surface of the negative electrode.

In the negative electrode, an area overlapping a winding finish end of the positive electrode and an area that does not overlap the winding finish end of the positive electrode may have thicknesses different from each other.

In the negative electrode, the area overlapping the winding finish end of the positive electrode may have a thickness less than that of the area that does not overlap the winding finish end of the positive electrode.

The negative electrode may include: a first negative electrode active material layer disposed to face a winding central portion of the electrode assembly; a second negative electrode active material layer disposed to face a winding outer portion of the electrode assembly; and a negative electrode collector disposed between the first negative electrode active material layer and the second negative electrode active material layer, wherein the negative electrode may be provided as the negative electrode collector on an area overlapping the winding finish end of the positive electrode, and the negative electrode may be constituted by at least one of the first negative electrode active material layer or the second negative electrode active material layer and the negative electrode collector on the area not overlapping the winding finish end of the positive electrode.

A secondary battery according to an embodiment of the present invention may include the above-described electrode assembly.

### ADVANTAGEOUS EFFECTS

According to the embodiments of the present invention, the avoidance recess part may be defined in any one of the positive electrode and the negative electrode. The contact between the end of the positive electrode and the negative electrode may be avoided by the avoidance recess part.

Therefore, the present invention may reduce the direct contact stress applied to the negative electrode by the winding finish end of the positive electrode to prevent the cracks and disconnection of the negative electrode from occurring, thereby improving the cell performance degradation and ensuring the stability.

In addition, the various effects that are directly or indirectly identified through the present disclosure may be provided.

### BRIEF DESCRIPTION OF THE DRAWINGS

FIG. 1 is a perspective view of a secondary battery including an electrode assembly according to a first embodiment of the present invention.
FIG. 2 is an exploded perspective view illustrating an unfolded state before the electrode assembly of FIG. 1 is wound.
FIG. 3 is a detailed cross-sectional view of a winding finish end of a negative electrode and a winding finish end of a positive electrode after the electrode assembly of FIG. 2 is wounded.
FIG. 4a is a perspective view illustrating a state in which the negative electrode of FIG. 3 is unfolded before being wound, and FIG. 4b is a cross-sectional view illustrating a state after the negative electrode and the positive electrode disposed on an area A of FIG. 4a are wound.
FIG. 5 is a detailed cross-sectional view of a winding finish end of a negative electrode and a winding finish end of a positive electrode after an electrode assembly is wounded according to a second embodiment of the present invention.
FIG. 6a is a perspective view illustrating a state in which the negative electrode of FIG. 5 is unfolded before being wound, and FIG. 6b is a cross-sectional view illustrating a state after the negative electrode and the positive electrode disposed on an area B of FIG. 6a are wound.
FIG. 7 is a detailed cross-sectional view of a winding finish end of a negative electrode and a winding finish end of a positive electrode after an electrode assembly is wounded according to a third embodiment of the present invention.
FIG. 8 is a detailed cross-sectional view of a winding finish end of a negative electrode and a winding finish end of a positive electrode after an electrode assembly is wounded according to a fourth embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following embodiments.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Secondary battery including electrode assembly according to first embodiment

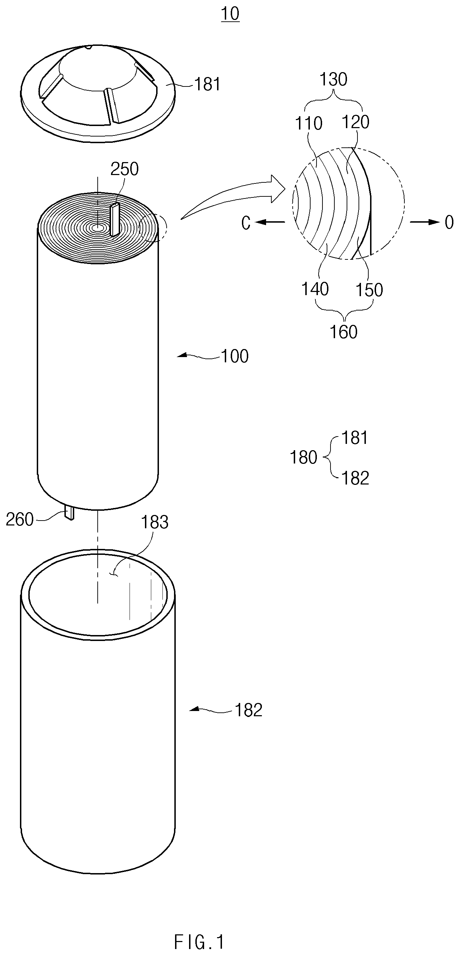

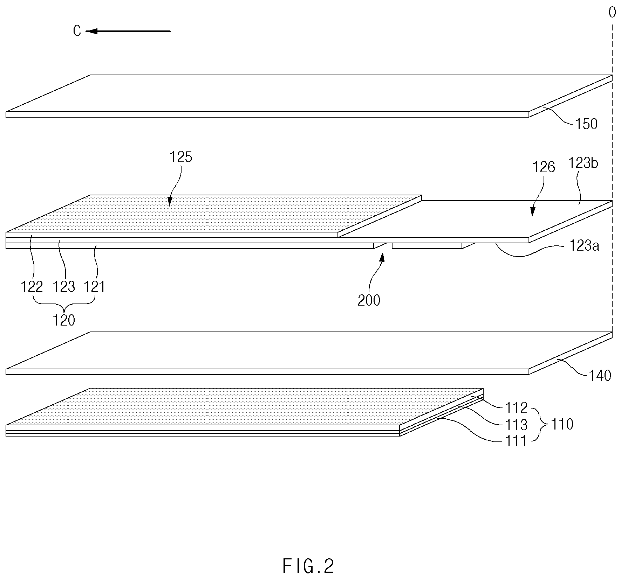

FIG. 1 is a perspective view of a secondary battery including an electrode assembly according to a first embodiment of the present invention, and FIG. 2 is an exploded perspective view illustrating an unfolded state before the electrode assembly of FIG. 1 is wound.

Referring to FIGS. 1 to 2, a secondary battery 10 according to an embodiment of the present invention may include an electrode assembly 100 and a battery case 180.

The electrode assembly 100 may be accommodated in the battery case 180. The battery case 180 may include a battery can 182 and a cap assembly 181.

The battery can 182 may include an accommodation part 183 in which the electrode assembly 100 is accommodated. An electrolyte may be injected into the accommodation part 183 so that the electrode assembly 100 is completely immersed in the battery can 182. An upper portion of the battery can 182 may be opened to be used as an inflow passage of the electrode assembly 100. The battery can 182 may include a metal. For example, the battery can 182 may include stainless steel.

Since the battery can 182 accommodates the electrode assembly 100, the battery can 182 may be provided in a shape corresponding to that of the electrode assembly 100. For example, the battery can 182 may be provided in a cylindrical shape so that the electrode assembly 100, which is provided in a jelly-roll shape, is accommodated.

The cap assembly 181 may be mounted on the battery can 182 to cover the opened upper portion of the battery can 182 and be coupled to the battery can 182 The cap assembly 181 may be provided by sequentially stacking a safety belt, a current blocking element, a positive temperature coefficient (PTC) element, and a top cap. The top cap is seated and coupled to the uppermost portion of the cap assembly 181 to transmit current generated in the secondary battery to the outside.

One of the battery can 182 and the cap assembly 181 may be electrically connected to a positive electrode tab 250 of the electrode assembly 100, and the other one of the battery can 182 and the cap 181 may be electrically connected to a negative electrode tab 260 of the electrode assembly 100. For example, the cap assembly 181 may be electrically connected to the positive electrode tab 250 through a welding process, and a bottom surface of the battery can 182 may be electrically connected to the negative electrode tab 260 through a welding process. As another example, one of the battery can 182 and the cap assembly 181 may be electrically connected to the positive electrode tab 250 and the negative electrode tab 260.

The electrode assembly 100 may be a chargeable and dischargeable power generating element. The electrode assembly 100 has a structure in which electrodes 130 and separators 160 are combined and alternately stacked. The electrode assembly 100 may be provided in a shape in which the electrodes 130 and the separators 160 are alternately combined to be wound. The electrode assembly 100 may have a structure of which a diameter is expanded radially in proportion to the number of winding rotation. Here, the electrode assembly 100 may be wound in a cylindrical shape wound around a winding central portion (or central axis) C. For example, the electrode 130 may include a positive electrode 110 and a negative electrode 120, and the separator 160 may include a first separator 140 and a second separator 150. The electrode assembly 100 may be an electrode assembly that is in the form of a jelly roll, which is wound in a cylindrical shape by sequentially stacking a positive electrode 110, a first separator 140, a negative electrode 120, and a second separator 150.

The positive electrode 110 may include a positive electrode collector 113, a first positive electrode active material layer 111 disposed on an inner surface (e.g., surface facing the winding central portion C) of the positive electrode collector 113, and a second positive electrode active material layer 112 disposed on an outer surface (e.g., surface facing the winding outer portion O) of the positive electrode collector 113. The positive electrode 110 may not have a positive electrode non-coating portion on the winding outer portion O. In the winding outer portion O, the positive electrode collector 113 may not protrude rather than the first positive electrode active material layer 111 and the second positive electrode active material layer 111.

For example, the positive electrode collector 113 may be provided as foil made of an aluminum material. At least one of the first positive electrode active material layer 111 or the second positive electrode active material layer layer may include, for example, lithium manganese oxide, lithium cobalt oxide, lithium nickel oxide, lithium iron phosphate, or a compound containing at least one of these and mixtures thereof.

The negative electrode 120 may include a negative electrode collector 123, a first negative electrode active material layer 121 disposed on an inner surface 123a (e.g., surface facing the winding central portion C) of the negative electrode collector 123, and a second negative electrode active material 122 disposed on an outer surface (e.g., surface facing the winding outer portion O) of the negative electrode collector 123. The negative electrode 120 may be divided into a negative electrode coating portion 125 (or coating portion) and a negative electrode non-coating portion (or non-coating portion) according to formation positions of the first negative electrode active material layer 121 and the second negative electrode active material layer 122. The negative electrode coating portion 125 may be an area on which the first negative electrode active material layer 121 and the second negative electrode active material layer 122 are disposed. The negative electrode non-coating portion 126 may be an area on which at least one of the first negative electrode active material layer 121 or the second negative electrode active material layer 122 is not disposed. At least one negative electrode tab 260 may be fused to the negative electrode collector 123 of the negative electrode non-coating portion 126 by a method such as welding.

The negative electrode collector 123 may be, for example, provided as foil made of a copper (Cu) or nickel (Ni) material. At least one of the first negative electrode active material layer 121 or the second negative electrode active material layer 122 may include, for example, synthetic graphite, a lithium metal, a lithium alloy, carbon, petroleum coke, activated carbon, graphite, a silicon compound, a tin compound, a titanium compound, or an alloy thereof. At least one of the first negative electrode active material layer 121 or the second negative electrode active material layer 122 may contain, for example, non-graphite SiO (silica) or SiC (silicon carbide).

Since the negative electrode 120 is disposed to surround the positive electrode 110 when wound, the negative electrode 120 may be provided to be longer than the positive electrode 110. In the winding outer portion O of the electrode assembly 100, the first negative electrode active material layer 121 disposed on the inner surface 123a of the negative electrode collector 123 may face the positive electrode 110. On the other hand, the second negative electrode active material layer 122 disposed on the outer surface 123b of the negative electrode collector 123 may not face the positive electrode 110. Thus, the first negative electrode active material layer 121 may be provided longer than the second negative electrode active material layer 122 on the winding outer portion O of the electrode assembly. In the winding outer portion O of the electrode assembly, an end (e.g., winding finish end) of the first negative electrode active material layer 121 may be disposed closer to an end (e.g., winding finish end) of the negative electrode collector 123 than an end (e.g., winding finish end) of the second negative electrode active material layer 122.

The separator 160 may be disposed between the positive electrode 110 and the negative electrode 120 to separate and electrically insulate the positive electrode 110 from the negative electrode 120. The separator 160 may include a first separator 140 and a second separator 150. The first separator 140 may be stacked on the outside of either the positive electrode 110 or the negative electrode 120. The second separator 150 may be stacked on the outside of the other one of the positive electrode 110 and the negative electrode 120. For example, when the first separator 140 is stacked on the outside of the positive electrode 110, the first separator 140 may be disposed between the second positive electrode active material layer 112 and the first negative electrode active material layer 121. When the second separator 150 is stacked on the outside of the negative electrode 120, the second separator 150 may be disposed between the first positive electrode active material layer 111 and the second negative electrode active material layer 122. When a stack, in which the positive electrode 110, the first separator 140, the negative electrode 120, and the second separator 150 are sequentially stacked, is wound, the jelly roll-type electrode assembly 110 in which the second separator 150 is disposed on the outermost surface, may be provided.

At least one of the first separator 140 or the second separator 150 may be, for example, a multi-layered film produced by polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

In the electrode assembly 100 according to the present invention, an avoidance recess part (or a first avoidance recess part) 200, which is an empty space, may be defined in at least one of the negative electrode 120 or the positive electrode 110. The avoidance recess part 200 may be defined in either the negative electrode 120 or the positive electrode 110. The avoidance recess 200 may be defined to be recessed in an area overlapping an end of the remaining one of the negative electrode 120 and the positive electrode 110. For example, the avoidance recess part 200 may be defined in a partial area of the negative electrode 120 corresponding to a winding finish end of the positive electrode 110.

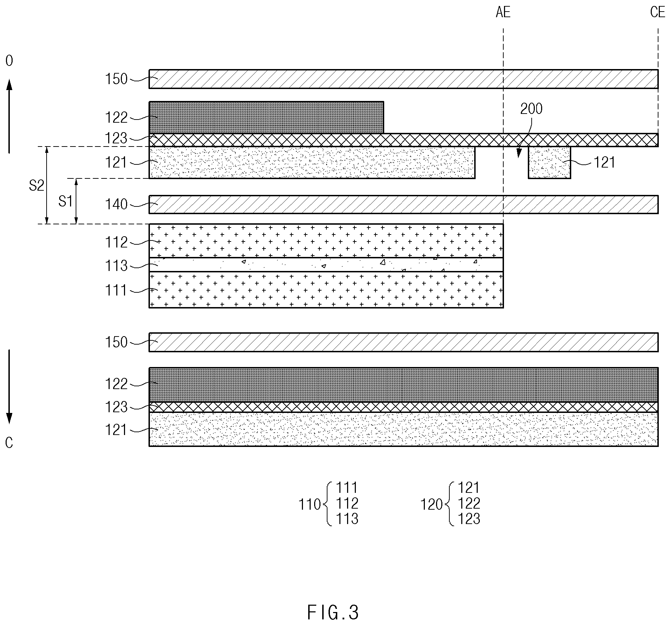

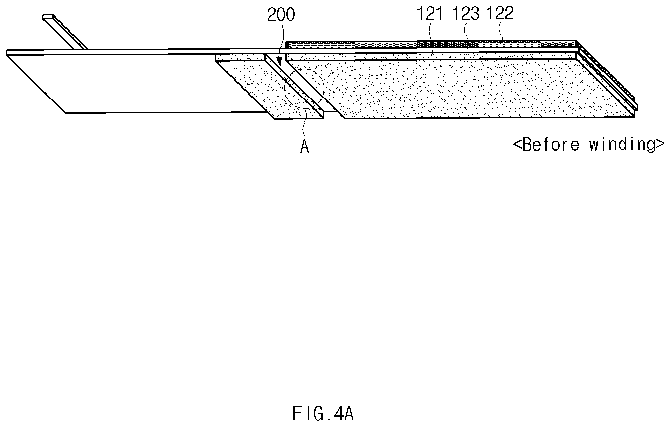

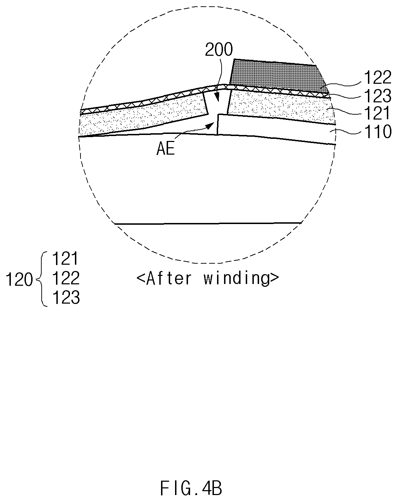

FIG. 3 is a detailed cross-sectional view of a winding finish end CE of the negative electrode and a winding finish end AE of the positive electrode after the electrode assembly of FIG. 2 is wounded, FIG. 4a is a perspective view illustrating a state in which the negative electrode of FIG. 3 is unfolded before being wound, and FIG. 4b is a cross-sectional view illustrating a state after the negative electrode and the positive electrode disposed on an area A of FIG. 4a are wound. In FIG. 3, the positive electrode 110, the first separator 140, the negative electrode 120, and the second separator 150, which are wound, are illustrated to be spaced apart from each other, but the positive electrode 110, the first separator 140, the negative electrode 120, and the second separator 150, which are wound, may be in close contact with each other.

Referring to FIGS. 3 to 4b, the negative electrode 120 may have different electrodes an area that overlaps the winding finish end AE of the positive electrode 110 and an area that does not overlap the winding finish end AE of the positive electrode 110. In the negative electrode 120, the area overlapping the winding finish end AE of the positive electrode 110 may have a thickness greater than that of the area that does not overlap the winding finish end AE of the positive electrode 110.

The negative electrode 120 may include at least one of the first negative electrode active material layer 121 or the second negative electrode active material layer 122 on the area, which does not overlap the winding finish end AE of the positive electrode 110, and the negative electrode collector 123. The negative electrode 120 may have a maximum thickness corresponding to the sum of thicknesses of the first negative electrode active material layer 121, the second negative electrode active material layer 122, and the negative electrode collector 123 on at least a partial area that does not overlap the winding finish end AE of the positive electrode 110.

The negative electrode 120 may be provided as a negative electrode collector 123 on the area that overlaps the winding finish end AE of the positive electrode 110. The negative electrode 120 may have a thickness less than the maximum thickness on the area overlapping the winding finish end AE of the positive electrode 110. The negative electrode 120 may have a thickness corresponding to the thickness of the negative electrode collector 123 on the area overlapping the winding finish end AE of the positive electrode 110. An avoidance recess part 200 that overlaps the winding finish end AE of the positive electrode 110 may be defined in the negative electrode 120. The avoidance recess part 200 may be recessed from an inner surface of the negative electrode 120 facing a winding central portion C to an outer surface of the negative electrode 120 facing a winding outer portion O. The avoidance recess part 200 may be defined by recessing the first negative electrode active material layer 121 facing outward from the winding finish end AE of the positive electrode 110. Since the first negative active material layer 121 is not formed on the avoidance recess part 200, the negative electrode collector 123 may face the first separator 140 that overlaps the avoidance recess part 200. The avoidance recess part 200 may be provided in the form of a groove surrounded by the first negative electrode active material layer 121 and the negative electrode collector 123. A portion of the avoidance recess part 200 may be opened toward the first separator 140, and a remaining portion of the avoidance recess part 200 may be surrounded by the negative electrode collector 123 and the first negative electrode active material layer 121. In the avoidance recess part 200, the negative electrode collector 123 may have a height difference with respect to the first negative electrode active material layer 121.

As described in FIG. 4a, the avoidance recess part 200 may be provided in the shape of a groove along a width direction of the negative electrode 120 to overlap the winding finish end of the positive electrode 110. The groove-shaped avoidance recess part 200 may extend in parallel to the width direction of the negative electrode 120.

A spaced distance between the winding finish end AE of the positive electrode 110 and the negative electrode 120 may increase by the avoidance recess part 200. In the case of a comparative example in which the avoidance recess part 200 is not formed, the winding finish end AE of the positive electrode 110 and the negative electrode 120 may be spaced apart from each other by a spaced distance S1 (e.g., a thickness of the first separator 140) between the first negative electrode active material layer 121 and the winding finish end AE. On the other hand, in the case of an embodiment in which the avoidance recess part 200 is formed, the winding finish end AE of the positive electrode 110 and the negative electrode 120 may be spaced apart from each other by a spaced distance S2 (e.g., the sum of the thickness of the first separator 140 and the thickness of the first negative electrode active material layer 121) between the first collector 123 and the winding finish end AE of the positive electrode 110. Thus, in the embodiment in which the avoidance recess part 200 is formed, the spaced distance between the winding finish end AE of the positive electrode 110 and the negative electrode 120 may more increase by the thickness of the first negative electrode active material layer 121 compared to the comparative example in which the avoidance recess part 200 is not formed.

Contact between the winding finish end AE of the positive electrode 110 and the negative electrode 120 may be avoided by the avoidance recess part 200. That is, direct contact between the winding finish end AE of the wound positive electrode 110 and the first negative electrode active material layer 121 may be avoided by the avoidance recess part 200 as illustrated in FIG. 4b. In the wound electrode assembly, the winding finish end AE of the positive electrode 110 and the negative electrode 120 may be in non-contact with each other. Thus, the present invention may reduce direct contact stress caused by the winding finish end AE of the positive electrode 110 to prevent cracks and disconnection of the negative electrode 120 from occurring.

### Electrode assembly according to second embodiment

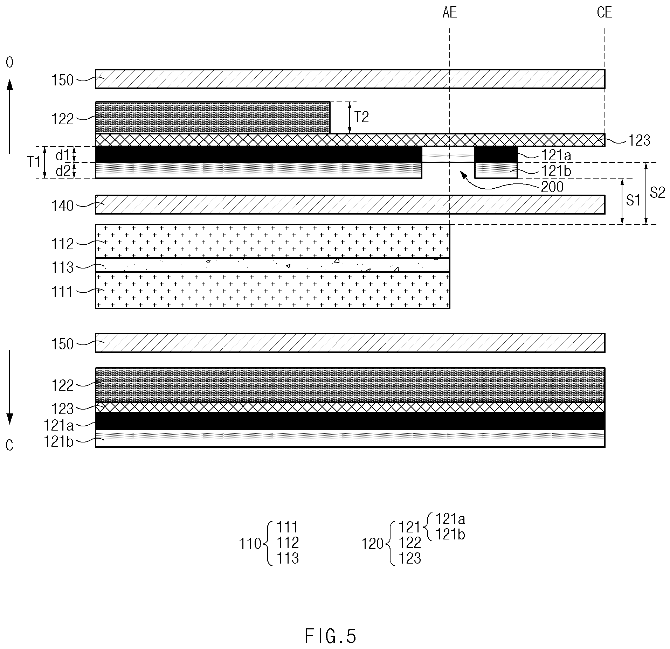

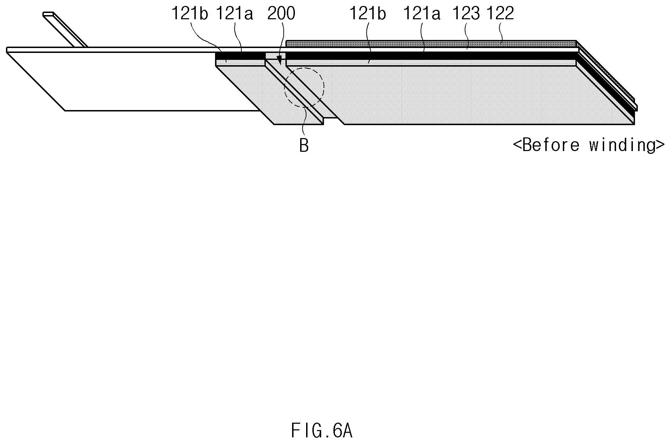

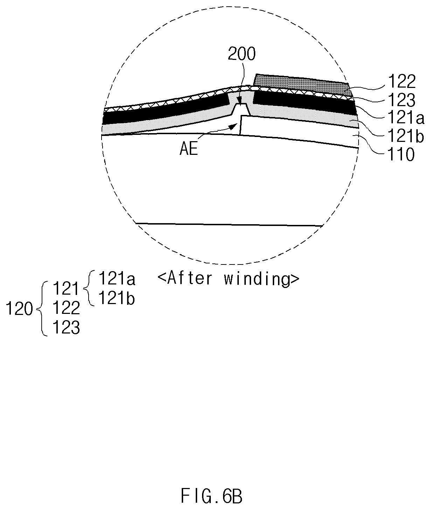

FIG. 5 is a detailed cross-sectional view of a winding finish end of a negative electrode and a winding finish end of a positive electrode after an electrode assembly is wounded according to a second embodiment of the present invention, FIG. 6a is a perspective view illustrating a state in which the negative electrode of FIG. 5 is unfolded before being wound, and FIG. 6b is a cross-sectional view illustrating a state after the negative electrode and the positive electrode disposed on an area B of FIG. 6a are wound. In FIG. 5, the positive electrode 110, the first separator 140, the negative electrode 120, and the second separator 150, which are wound, are illustrated to be spaced apart from each other, but the positive electrode 110, the first separator 140, the negative electrode 120, and the second separator 150, which are wound, may be in close contact with each other.

Referring to FIGS. 5 to 6b, an electrode assembly according to the second embodiment of the present invention may include a negative electrode 120, a positive electrode 110, a first separator 140, and a second separator 150. The negative electrode 120 may include a first negative electrode active material layer 121, a negative electrode collector 123, and a second negative electrode active material layer 122.

The first negative electrode active material layer 121 may be disposed so that an inner surface thereof faces a winding central portion C, and an outer surface thereof faces a winding outer portion O. The first negative electrode active material layer 121 may be provided as a multilayer structure including a plurality of active material layers. An avoidance recess part 200 may be defined in at least one of the plurality of active material layers.

For example, the first negative electrode active material layer 121 may include a first active material layer 121a and a second active material layer 121b. The first active material layer 121a may be provided by being applied on the negative electrode collector 123. The first active material layer 121a may be provided to have a first thickness d1 less than that of the second negative electrode active material layer 122. The first active material layer 121a may be made of the same or different material from the second active material layer 121b.

The second active material layer 121b may be provided by being applied on the first active material layer 121a with an area greater than that of the first active material layer 121a. The second active material layer 121b may be provided to have a second thickness d2 less than that of the second negative electrode active material layer 122. The second thickness d2 may be the same as or different from the first thickness d1. The sum T1 of the first thickness d1 of the second active material layer 121a and the second thickness d2 of the first active material layer 121b may be the same as or similar to a thickness T2 of the second negative electrode active material layer 122.

The avoidance recess part 200 corresponding to the winding finish end AE of the positive electrode 110 may be defined in either the first active material layer 121a or the second active material layer 121b. The avoidance recess part 200 may be concavely defined to have an empty space in an area corresponding to the winding finish end AE of the positive electrode 110.

The avoidance recess part 200 may be defined by recessing the first active material layer 121a facing the winding finish end AE of the positive electrode 110 to the outside toward the winding outer portion O. The first active material layer 121a may be disposed on at least a partial area excluding the avoidance recess part 200. The first active material layer 121a may not be provided on the avoidance recess part 200. A portion of the second active material layer 121b may be provided on the negative electrode collector 123 corresponding to the avoidance recess part 200. At least a remaining portion of the second active material layer 121b may be disposed on the first active material layer 121a. The second active material layer 121b may face the first separator 140 that overlaps the avoidance recess part 200. The avoidance recess part 200 may be provided in the form of a groove surrounded by the second active material layer 121b disposed on the negative electrode collector 123 and the first active material layer 121a disposed on the second active material layer 121b. A portion of the avoidance recess part 200 may be opened toward the first separator 140, and a remaining portion of the avoidance recess part 200 may be surrounded by the second active material layer 121b. The second active material layer 121b disposed on the avoidance recess part 200 may have a height difference with respect to the second active material layer 121b disposed on the first active material layer 121a.

A spaced distance between the winding finish end AE of the positive electrode 110 and the negative electrode 120 may increase by the avoidance recess part 200. In the case of a comparative example in which the avoidance recess part 200 is not formed, the winding finish end AE of the positive electrode 110 and the negative electrode 120 may be spaced apart from each other by a spaced distance S1 (e.g., a minimum thickness of the first separator 140) between the first negative electrode active material layer 121 and the winding finish end AE. On the other hand, in the case of an embodiment in which the avoidance recess part 200 is formed, the winding finish end AE of the positive electrode 110 and the negative electrode 120 may be spaced apart from each other by a spaced distance S2 (e.g., the sum of the thickness of the first active material layer 121a or the second active material layer 121b and the thickness of the first separator 140) between the first active material layer 121a or the second active material layer 121b and the winding finish end AE of the positive electrode 110. Thus, in the embodiment in which the avoidance recess part 200 is formed, the spaced distance between the winding finish end AE of the positive electrode 110 and the negative electrode 120 may more increase by the thickness of the first negative electrode active material layer 121a or the second active material layer 121b compared to the comparative example in which the avoidance recess part 200 is not formed.

Contact between the winding finish end AE of the positive electrode 110 and the negative electrode 120 may be avoided by the avoidance recess part 200, which increases in spaced distance between the winding finish end AE of the positive electrode 110 and the negative electrode 120. That is, as illustrated in FIG. 6b, in the wound electrode assembly, direct contact between the winding finish end AE of the positive electrode 110 and the first negative electrode active material layer 121 may be avoided by the avoidance recess part 200. In the wound electrode assembly, the winding finish end AE of the positive electrode 110 and the negative electrode 120 may be in non-contact with each other. Thus, the present invention may reduce direct contact stress caused by the winding finish end AE of the positive electrode 110 to prevent cracks and disconnection of the negative electrode 120 due to the contact stress from occurring.

In addition, the second active material layer 121b and the negative electrode collector 123 may be disposed on an area that overlaps the winding finish end AE of the positive electrode 110. The positive electrode 120 may stably supply an electrical signal (e.g., current) through the negative electrode collector 123 and the second negative electrode active material layer 121b on the area overlapping the winding finish end AE of the positive electrode 110.

### Electrode assembly according to third embodiment

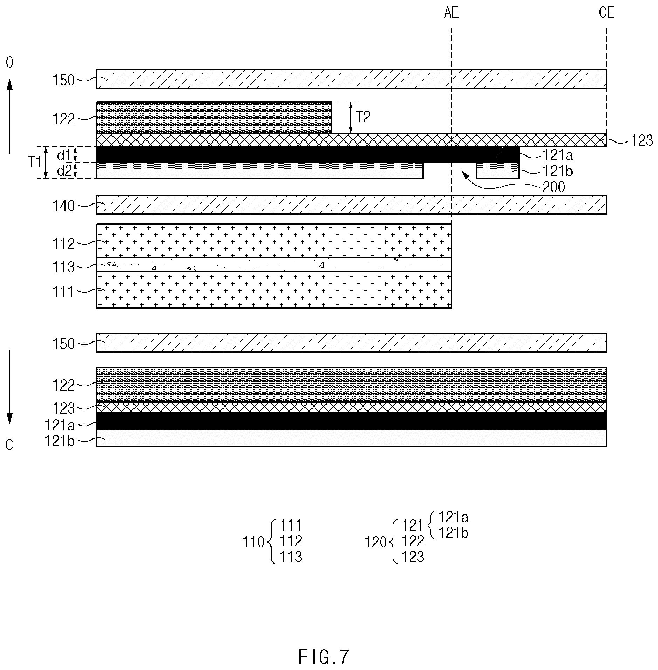

FIG. 7 is a detailed cross-sectional view of a winding finish end of a negative electrode and a winding finish end of a positive electrode after an electrode assembly is wounded according to a third embodiment of the present invention. In FIG. 7, the positive electrode 110, the first separator 140, the negative electrode 120, and the second separator 150, which are wound, are illustrated to be spaced apart from each other, but the positive electrode 110, the first separator 140, the negative electrode 120, and the second separator 150, which are wound, may be in close contact with each other.

Referring to FIG. 7, the electrode assembly according to the third embodiment of the present invention may be provided with the same components as the electrode assembly illustrated in FIGS. 5 to 6b except that an avoidance recess part 200 is defined in a second active material layer 121b. Thus, detailed descriptions of the same components will be omitted.

As illustrated in FIG. 7, the avoidance recess part 200 may be defined by recessing the second active material layer 121b facing a winding finish end AE of the positive electrode 110 to the outside toward a winding outer portion O. A first active material layer 121a may be provided on a negative electrode collector 123 with an area greater than that of the second active material layer 121b. A second active material layer 121b may be disposed on the first active material layer 121a excluding an area corresponding to the avoidance recess part 200. The second active material layer 121b may face the first separator 140 that overlaps the avoidance recess part 200. The avoidance recess part 200 may be provided in the form of a groove surrounded by the first active material layer 121a and the second active material layer 121b. A portion of the avoidance recess part 200 may be opened toward the first separator 140, and a remaining portion of the avoidance recess part 200 may be surrounded by the first active material layer 121a and the second active material layer 121b. The first active material layer 121a disposed on the avoidance recess part 200 may have a height difference with respect to the second active material layer 121b disposed on the first active material layer 121a.

Contact between the winding finish end AE of the positive electrode and the negative electrode 120 may be avoided by the avoidance recess part 200. That is, in the wound electrode assembly, direct contact between the winding finish end AE of the positive electrode 110 and the first negative electrode active material layer 121 may be avoided by the avoidance recess part 200. In the wound electrode assembly, the winding finish end AE of the positive electrode 110 and the negative electrode 120 may be in non-contact with each other. Thus, the present invention may reduce direct contact stress caused by the winding finish end AE of the positive electrode 110 to prevent cracks and disconnection of the negative electrode 120 from occurring.

### Electrode assembly according to fourth embodiment

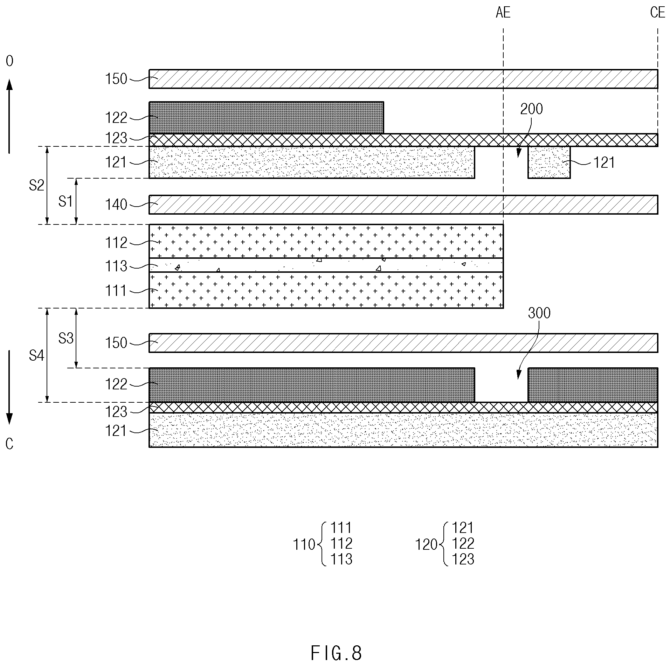

FIG. 8 is a detailed cross-sectional view of a winding finish end of a negative electrode and a winding finish end of a positive electrode after an electrode assembly is wounded according to a fourth embodiment of the present invention. In FIG. 8, the positive electrode 110, the first separator 140, the negative electrode 120, and the second separator 150, which are wound, are illustrated to be spaced apart from each other, but the positive electrode 110, the first separator 140, the negative electrode 120, and the second separator 150, which are wound, may be in close contact with each other.

Referring to FIG. 8, the electrode assembly according to the fourth embodiment of the present invention may be provided with the same components as the electrode assembly illustrated in FIGS. 3 to 4B except that the electrode assembly further includes a second avoidance recess 300. Thus, detailed descriptions of the same components will be omitted.

A first avoidance recess part 200 and a second avoidance recess part 300 may be defined in the negative electrode 120. The first avoidance recess part 200 may be defined in the negative electrode 120 disposed outside a winding finish end AE of the positive electrode 110. The first avoidance recess part 200 may be recessed from an inner surface of the negative electrode 120 facing a winding central portion C to an outer surface of the negative electrode 120 facing a winding outer portion O. For example, the first avoidance recess part 200 may be recessed from an inner surface of the first negative electrode active material layer 121, which is disposed toward a winding central portion C, toward the negative electrode collector 123, which is disposed toward the winding outer portion O. The first avoidance recess part 200 may be provided by recessing the first negative electrode active material layer 121 toward the negative electrode collector 123. Contact between the second positive electrode active material layer 112, which defines at least a portion of the outside of the winding finish end AE of the positive electrode 110, and the negative electrode 120 may be avoided by the first avoidance recess part 200. That is, in the wound electrode assembly, direct contact between the outside of the winding finish end AE of the positive electrode 110 and the negative electrode 120 may be avoided by the first avoidance recess part 200.

The second avoidance recess part 300 may be defined in the negative electrode 120 disposed inside the winding finish end AE of the positive electrode 110. The second avoidance recess part 300 may be recessed from an outer surface of the negative electrode 120 facing the winding outer portion O to an inner surface of the negative electrode 120 facing the winding central portion C. The second avoidance recess part 300 may be recessed from an outer surface of the second negative electrode active material layer 122 facing the winding outer portion O to an inner surface of the first negative electrode active material layer 121 facing the winding central portion C. The second avoidance recess part 300 may be provided by recessing the second negative electrode active material layer 122 toward the negative electrode collector 123. Contact between the first positive electrode active material layer 111, which defines at least a portion of the inside of the winding finish end AE of the positive electrode 110, and the negative electrode 120 may be avoided by the second avoidance recess part 300. That is, in the wound electrode assembly, direct contact between the inside of the winding finish end AE of the positive electrode 110 and the negative electrode 120 may be avoided by the second avoidance recess part 300.

As described above, in the wound electrode assembly, each of the inside and outside of the winding finish end AE of the positive electrode 110 and the negative electrode 120 may be in non-contact with each other. Thus, the present invention may reduce direct contact stress applied to the negative electrode 120 by the winding finish end AE of the positive electrode 110 to prevent cracks and disconnection of the negative electrode 120 due to the direct contact stress from occurring.

The electrode assembly described above is not limited to the embodiments described in each drawing, and the structures described in each drawing may be applied in combination. In the secondary battery according to the present invention, only a plurality of electrode assemblies described in FIG. 3 may be adopted, only a plurality of electrode assemblies described in FIG. 5 may be adopted, only a plurality of electrode assemblies described in FIG. 7 may be adopted, only a plurality of electrode assemblies described in FIG. 8 may be adopted, or any one of the electrode assemblies described in FIGS. 3, 5, 7, and 8 and at least one of the electrode assemblies described in the remaining drawings may be adopted in combination. The avoidance recess part according to the present invention may also be disposed not only in the winding outer portion, but also in a winding intermediate portion between the winding central portion and the winding outer portion and the winding central portion. The avoidance recess part according to the present invention may be adopted to the negative electrode, the positive electrode, or the combination of the positive electrode and the negative electrode. The electrode assembly according to the present invention has been described as the structure applied to the cylindrical secondary battery as an example, but this is not limited, and the electrode assembly may also be applied to the pouch-type or prismatic battery.

The secondary battery including the above-described electrode assembly may be applied to various devices. It may be applied to transportation means such as electric bicycles, electric vehicles, hybrids, etc., but is not limited thereto and may be applied to various devices capable of using the battery module.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Electrode assembly
110: Positive electrode
120: Negative electrode
140: First separator
150: Second separator
200: Avoidance recess part

## Claims

1. An electrode assembly comprising:
a positive electrode and a negative electrode; and
a separator disposed between the positive electrode and the negative electrode,
wherein an avoidance recess part is defined in any one of the positive electrode and the negative electrode, and
the avoidance recess part is defined to be recessed in an area overlapping an end of a remaining electrode of the positive electrode and the negative electrode.

2. The electrode assembly of claim 1, wherein the avoidance recess part defined by recessing an area overlapping a winding finish end of the positive electrode is provided in the negative electrode, and
the avoidance recess part is recessed from an inner surface of the negative electrode, which is disposed toward a winding central portion of the electrode assembly, toward an outer surface of the negative electrode, which is disposed toward a winding outer portion of the electrode assembly.

3. The electrode assembly of claim 2, wherein the negative electrode comprises:
a first negative electrode active material layer disposed to face the winding central portion;
a second negative electrode active material layer disposed to face the winding outer portion; and
a negative electrode collector disposed between the first negative electrode active material layer and the second negative electrode active material layer,
wherein the avoidance recess part is defined in the first negative electrode active material layer.

4. The electrode assembly of claim 3, wherein the avoidance recess part is provided in the form of a groove surrounded by the first negative electrode active material layer and the negative electrode collector.

5. The electrode assembly of claim 2, wherein the negative electrode comprises:
a first negative electrode active material layer disposed to face the winding central portion and having a multilayer structure comprising a plurality of active material layers;
a second negative electrode active material layer disposed to face the winding outer portion; and
a negative electrode collector disposed between the first negative electrode active material layer and the second negative electrode active material layer,
wherein the avoidance recess part is defined in at least one of the plurality of active material layers.

6. The electrode assembly of claim 5, wherein at least one of the plurality of active material layers has a thickness less than that of the second negative electrode active material layer.

7. The electrode assembly of claim 5, wherein the first negative electrode active material layer comprises a first active material layer and a second active material layer, and
the avoidance recess part is defined in at least one of the first active material layer or the second active material layer.

8. The electrode assembly of claim 7, wherein the avoidance recess part is provided in the form of a groove surrounded by the first active material layer and the second active material layer.

9. The electrode assembly of claim 7, wherein the avoidance recess part is provided in the form of a groove surrounded by the second active material layer disposed on the negative electrode collector and the second active material layer disposed on the first active material layer.

10. The electrode assembly of claim 1, wherein the avoidance recess part is provided in the form of a groove along a width direction of the negative electrode to overlap a winding finish end of the positive electrode, and
the avoidance recess part having the groove shape extends in parallel to the width direction of the negative electrode.

11. The electrode assembly of claim 1, wherein the avoidance recess part comprises:
a first avoidance recess part defined in the negative electrode disposed outside a winding finish end of the positive electrode; and
a second avoidance recess part defined in the negative electrode disposed inside the winding finish end of the positive electrode.

12. The electrode assembly of claim 11, wherein the first avoidance recess part is recessed from an inner surface of the negative electrode, which is disposed toward a winding central portion of the electrode assembly, toward an outer surface of the negative electrode, which is disposed toward a winding outer portion of the electrode assembly, and
the second avoidance recess part is recessed from an outer surface of the negative electrode toward an inner surface of the negative electrode.

13. The electrode assembly of claim 1, wherein, in the negative electrode, an area overlapping a winding finish end of the positive electrode and an area that does not overlap the winding finish end of the positive electrode have thicknesses different from each other.

14. The electrode assembly of claim 13, wherein, in the negative electrode, the area overlapping the winding finish end of the positive electrode has a thickness less than that of the area that does not overlap the winding finish end of the positive electrode.

15. The electrode assembly of claim 13, wherein the negative electrode comprises:
a first negative electrode active material layer disposed to face a winding central portion of the electrode assembly;
a second negative electrode active material layer disposed to face a winding outer portion of the electrode assembly; and
a negative electrode collector disposed between the first negative electrode active material layer and the second negative electrode active material layer,
wherein the negative electrode is provided as the negative electrode collector on an area overlapping the winding finish end of the positive electrode, and
the negative electrode is constituted by at least one of the first negative electrode active material layer or the second negative electrode active material layer and the negative electrode collector on the area not overlapping the winding finish end of the positive electrode.

16. A secondary battery comprising the electrode assembly of any one of claims 1 to 15.
